Europäisches Patentamt

European Patent Office

Office européen des brevets

(19)

(11) Numéro de publication: 0 365 389
A1

# (12) DEMANDE DE BREVET EUROPEEN

(21) Numéro de dépôt: 89402743.2

(22) Date de dépôt: 04.10.89

(51) Int. Cl.⁵: G01C 21/04 , G01S 1/68

(30) Priorité: 05.10.88 FR 8813032

(43) Date de publication de la demande:
25.04.90 Bulletin 90/17

(84) Etats contractants désignés:
BE CH DE ES FR GB IT LI NL SE.

(71) Demandeur: AEROSPATIALE Société
Nationale Industrielle
37, Boulevard de Montmorency
F-75781 Paris Cédex 16(FR)

(72) Inventeur: Clariou, Jean-Pierre
8 Avenue Nicolas II
F-78600 Maisons-Laffitte(FR)
Inventeur: Vinitzky, Michel
Rue de Meulan
F-78440 Fontenay Saint Pere(FR)

(74) Mandataire: Mongrédien, André et al
c/o SOCIETE DE PROTECTION DES
INVENTIONS 25, rue de Ponthieu
F-75008 Paris(FR)

(54) Procédé d'analyse et d'identification automatique de signaux périodiques et dispositif pour la mise en oeuvre de ce procédé.

(57) Dispositif d'identification automatique de signaux périodiques comprenant : un microprocesseur (10) apte à déterminer les informations suivantes : le rythme, la période et le type de source émettant lesdits signaux périodiques ; un moyen (12) pour commander le microprocesseur (10), des moyens pour visualiser ces informations (14).

Application à la navigation côtière.

FIG. 2 A

## PROCEDE D'ANALYSE ET D'IDENTIFICATION AUTOMATIQUE DE SIGNAUX PERIODIQUES ET DISPOSITIF POUR LA MISE EN OEUVRE DE CE PROCEDE.

La présente invention a pour objet un procédé et un dispositif d'analyse et d'identification automatique de signaux périodiques. Elle s'applique en particulier à l'identification des signaux provenant de phares, de balises, de trompes ou tout autre générateur de signaux lumineux ou sonores utilisés notamment pour la navigation maritime.

On connaît les difficultés que rencontrent les navigateurs pour déterminer leur position en mer. De manière courante, ces derniers recourent à l'aide des phares et des balises lumineuses ou sonores disposés sur la côte. Mais, dans des conditions de visibilité médiocres ou encore par mer agitée, l'identification de ces balises s'avère fort difficile. D'autre part, les signaux délivrés par certaines balises se ressemblent, ce qui peut faire naître des confusions.

De manière générale, les signaux d'aide à la navigation possèdent les paramètres caractéristiques suivants qui permettent leur identification : le type, le rythme, la période, et pour les signaux lumineux, la couleur. Ces signaux présentent alternativement deux états : un état "allumé" et un état "éteint".

On distingue trois types, suivant la durée respective des états allumés et éteints. Un signal est "isophase" lorsque la durée des deux états est identique. Le signal est dit "à éclats" lorsque la durée de l'état allumé est inférieure à celle de l'état éteint. On parle de signal "à occultations" si l'état allumé dure plus longtemps que l'état éteint.

Le rythme du signal peut être simple ou composé selon la répartition de la durée des états allumés et éteints à l'intérieur d'une période.

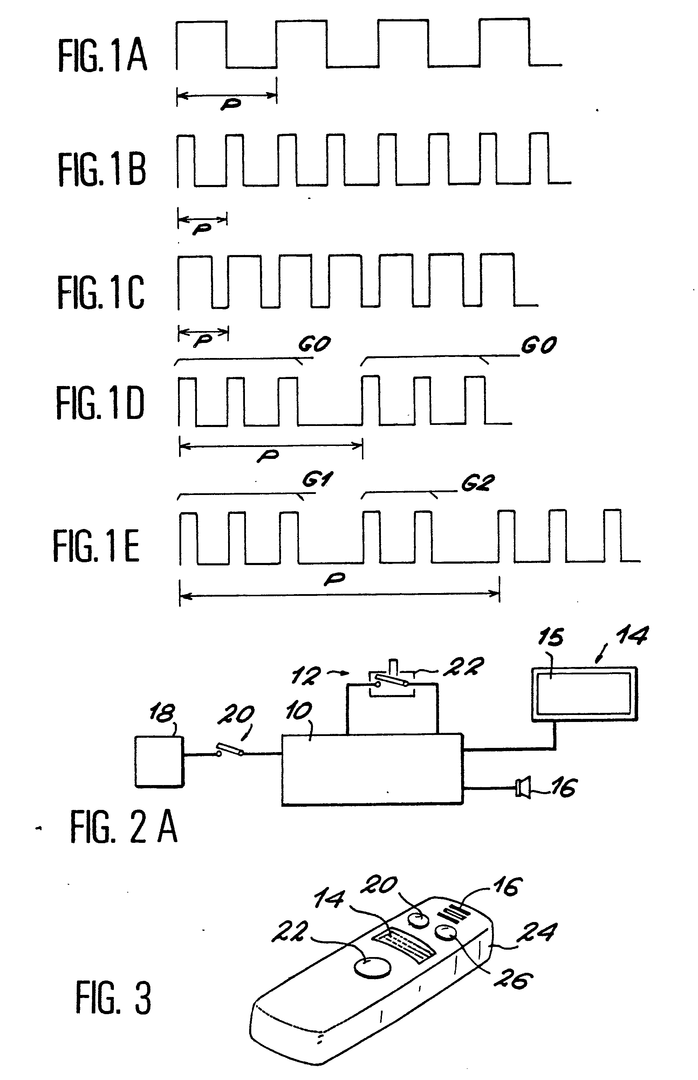

La figure 1A présente schématiquement un signal isophase dont le rythme est obligatoirement simple à l'intérieur d'une période P, le signal ne présente qu'une alternance entre l'état allumé et l'état éteint qui sont de même durée.

La figure 1B présente schématiquement un signal à éclats dont le rythme est simple. A l'intérieur d'une période P, le signal ne présente qu'une alternance allumé/éteint et la durée de l'état allumé est inférieure à celle de l'état éteint.

La figure 1C présente schématiquement un signal à occultations dont le rythme est simple. A l'intérieur d'une période P, le signal ne présente qu'une alternance allumé/éteint et la durée de l'état allumé est cette fois supérieure à celle de l'état éteint.

La figure 1D présente schématiquement un signal à éclats dont le rythme est simple mais groupé. A l'intérieur d'une période P, on compte plusieurs alternances entre les états allumés et éteints. D'autre part, selon les normes en vigueur, le nombre de durées différentes correspondant à ces états est au maximum égal à trois. Ici, l'état éteint présente deux durées différentes, pour une seule valeur de durée pour l'état allumé. On peut regrouper les alternances allumé/éteint en un seul groupe Go ; le rythme est donc simple.

La figure 1E présente schématiquement un signal à éclats dont le rythme est composé et groupé. Dans ce cas on peut regrouper les alternances allumé/éteint en deux groupes G1 et G2.

Ces deux derniers cas ont leur analogue de type à occultations. Les définitions restent les mêmes, l'état allumé jouant le rôle de l'état éteint.

On connaît déjà par le brevet français FR 2 188 243, un dispositif sonore visant à faciliter la mesure de la période du signal mais sans déterminer les autres paramètres. Par ailleurs, la concentration de l'observateur est amoindrie par la nécessité de prêter attention au signal sonore délivré par ce dispositif en même temps qu'au signal à identifier. Ce fait est particulièrement désavantageux, en particulier lorsque les conditions d'observation sont difficiles, notamment à cause de la fatigue ou d'une mer agitée.

On connaît également, par le brevet FR 2 539 227, un dispositif sonore ou lumineux capable de simuler tout signal préalablement mémorisé et que le navigateur va confronter au signal qu'il aperçoit (ou entend). La mémorisation est réalisée sur des modules correspondant chacun à une zone côtière déterminée. Ces modules sont interchangeables selon la zone abordée par le navigateur.

Ce dispositif souffre de deux inconvénients majeurs :

1) le navigateur doit connaître sa position de manière assez précise, sinon il risque de tester un nombre important de balises contenues dans un ou plusieurs modules avant d'obtenir la confirmation cherchée.

2) Pour être efficace, la simulation doit être synchronisée avec le signal observé et dans de nombreux cas (notamment pour les signaux à rythme composé) rien ne permet à l'observateur de garantir cette synchronisation avec le dispositif décrit.

On connaît encore, par le brevet EP 0 160 197, un appareil d'identification d'un signal composite périodique formé d'un train de signaux élémentaires. L'opérateur actionne un bouton-poussoir lors de l'apparition des éclats lumineux provenant d'un phare par exemple faisant ainsi correspondre une impulsion électrique de durée fixée à chaque allumage de l'éclat.

La série d'impulsions résultante reproduit les trains de signaux élémentaires dont est constitué le signal composite périodiquement émis par le phare.

Parmi cette série d'impulsions, l'appareil sélectionne un train d'impulsions jugé comme bon, c'est-à-dire représentatif de la moyenne des trains d'impulsions introduits dans l'appareil.

Ce train d'impulsions est comparé à des informations de référence contenues en mémoire, afin de rechercher une équivalence. L'équivalence est affichée permettant l'identification de l'émetteur.

L'identification du signal passe donc par l'identification de l'émetteur. Cette dernière est faite en référence à des informations contenues en mémoire sur des modules correspondant à des zones géographiques déterminées. De même que précédemment, le navigateur doit connaître sa position de manière assez précise pour utiliser le bon module contenant les informations de référence.

En plus, il s'avère que les signaux réellement émis par des balises telles que des phares peuvent être légèrement différents des signaux attendus et référencés. Dans ce cas, la comparaison avec des informations de référence ne permet pas de déterminer la région où l'on se trouve.

La présente invention remédie aux inconvénients des dispositifs existants. Conçue sous la forme d'un système compact et portable, elle dispense l'observateur de tout effort d'interprétation ou de recherches préalables. Elle identifie le type, le rythme et la période des signaux observés.

De façon plus précise, l'invention concerne un procédé pour l'analyse et l'identification automatique de signaux périodiques, ces signaux se composant de deux états alternés "allumés" et "éteints" successifs.

Le procédé consiste à :
déterminer la durée des différents états "allumés" et "éteints" successifs,
déterminer le nombre de valeurs prises par la durée des états "allumés" et "éteints",
en déduire, par des opérations appropriées, les informations suivantes : le type, le rythme, la période desdits signaux périodiques, afficher ces informations.

La présente invention concerne aussi un dispositif pour la mise en oeuvre de ce procédé.

Ce dispositif comprend :
un microprocesseur muni d'une source d'alimentation électrique, apte à déterminer les informations suviantes : le type, le rythme et la période de signaux périodiques, ce microprocesseur pouvant en outre mémoriser à volonté ces informations,
un moyen pour commander le microprocesseur au moins en relation avec les états "allumés" et "éteints", ce moyen étant relié à au moins une entrée du microprocesseur, ce moyen délivrant des signaux électriques aptes à la détermination par le microprocesseur de la durée des états "allumés" et "éteints" successifs.

Les caractéristiques et avantages de l'invention apparaîtront mieux à la lumière de la description qui suit donnée à titre explicatif et nullement limitatif. Cette description se réfère à des dessins annexés, sur lesquels :
- les figures 1A à 1E, déjà décrites, représentent schématiquement divers signaux périodiques identifiables par un dispositif selon l'invention,
- les figures 2A et 2B représentent schématiquement un dispositif selon l'invention,
- la figure 3 représente schématiquement et en perspective un boîtier renfermant un dispositif selon l'invention, et
- les figures 4A à 4C représentent schématiquement un organigramme d'un procédé pour la mise en oeuvre d'un dispositif selon l'invention.

Les figures 2A et 2B représentent schématiquement un dispositif selon l'invention.

Le dispositif comprend un microprocesseur 10 intégré sans boîtier, de type "single chip" par exemple, qui comporte ses propres périphériques intégrés : le microprocesseur 1 proprement dit est connecté par un bus à : une mémoire morte (ROM) 2 contenant le programme de gestion du microprocesseur 1, une autre mémoire 3 du type EEPROM permettant d'enregistrer le résultat des opérations effectuées par le microprocesseur 1, un système de gestion des entrées/sorties. Le microprocesseur 1 est connecté à un quartz 5 permettant le fonctionnement d'une horloge interne.

La programmation du microprocesseur 10 est réalisée par le fabricant de manière à suivre les instructions de l'inventeur. Ce microprocesseur 10 met en oeuvre l'algorithme de saisie des données, d'analyse du signal et d'affichage des résultats. Il peut être du type MC 68 HC 11 fabriqué par la société Motorola par exemple. Il est réalisé à partir d'une technologie CMOS ou HCMOS ne réclamant qu'une très faible consommation d'énergie électrique et permettant une alimentation par pile électrique.

Le microprocesseur 10 est relié à une source d'alimentation électrique 18 par l'intermédiaire d'un interrupteur 20. Cette source d'alimentation électrique 18 peut être une pile ou une batterie électrique de 9 V, par exemple. 5 V étant nécessaires à l'alimentation du microprocesseur 10, un régulateur est intégré à la source d'alimentation 18, qui permet, par ailleurs, de compenser les effets d'usure de la pile.

La commande du microprocesseur 10 s'effectue par l'intermédiaire d'un moyen 12 : un contacteur électrique 22 par exemple. Ce contacteur 22 peut être à bouton poussoir par exemple.

L'opérateur appuie sur ce bouton poussoir à chaque fois qu'il observe l'état allumé du signal à identifier. Le bouton-poussoir doit être maintenu enclenché pendant toute la durée de cet état. Il délivre des signaux électriques de type créneaux qui permettent au microprocesseur 10 de déterminer la durée des pressions exercées par détection des fronts de montée et de descente des créneaux. Ainsi, lorsque l'opérateur règle ses pressions sur la durée de l'état "allumé" et relâche le bouton lors des extinctions, le microprocesseur 10 détermine la durée des états "allumés" et "éteints" à la précision de la manipulation.

Le microprocesseur 10 enregistre et détermine lui-même le nombre de pressions qui lui sont nécessaires pour une identification dégagée de toute ambiguïté, comme on le verra plus loin en détail. L'opérateur est prévenu de la fin de la saisie des données par un signal sonore par exemple, délivré par un générateur de signaux sonores 16 commandé par le microprocesseur 10 auquel il est relié. Lorsque le microprocesseur 10 a compté le nombre de pressions nécessaires à une identification, il ne prend plus en compte les données provenant du contacteur.

Le microprocesseur 10 détermine le type, le rythme et la période du signal observé. Les informations sont affichées sur un moyen de visualisation 14, préférentiellement un écran d'affichage 15. Cet écran peut être à diodes électroluminescentes par exemple. L'écran 14 est commandé par le microprocesseur 10 auquel il est connecté.

Le générateur de signaux sonores 16 peut aussi délivrer un signal sonore durant chaque pression sur le contacteur 22.

La figure 3 représente schématiquement et en perspective un boîtier étanche protégeant les différents éléments du dispositif contre les intempéries et les chocs.

Lorsque le dispositif est mis en service en fermant l'interrupteur 20, un menu déroulant s'affiche sur l'écran 14. Les options proposées restent affichées pendant deux secondes par exemple. On les sélectionne, à volonté, par une pression sur le contacteur 22. On peut ainsi choisir d'accompagner chaque pression sur le contacteur 22 par un signal sonore, ou mémoriser le signal identifié ou encore, lorsqu'un signal lumineux est identifié et mémorisé, enregistrer sa couleur. Eventuellement, une touche 26 directement reliée à une entrée du microprocesseur 10 permet la réinitialisation du dispositif (Reset en terminologie anglo-saxonne).

Le dispositif peut être doté d'une fonction dite "Auto-off" qui permet la coupure automatique de l'alimentation électrique en cas de non utilisation prolongée ; ce type de fonction, usuel sur ces dispositifs permet de prolonger la durée de vie de la source d'alimentation.

Les options étant déterminées, le microprocesseur 10 indique par affichage d'un message sur l'écran 14 qu'il est prêt à effectuer la saisie.

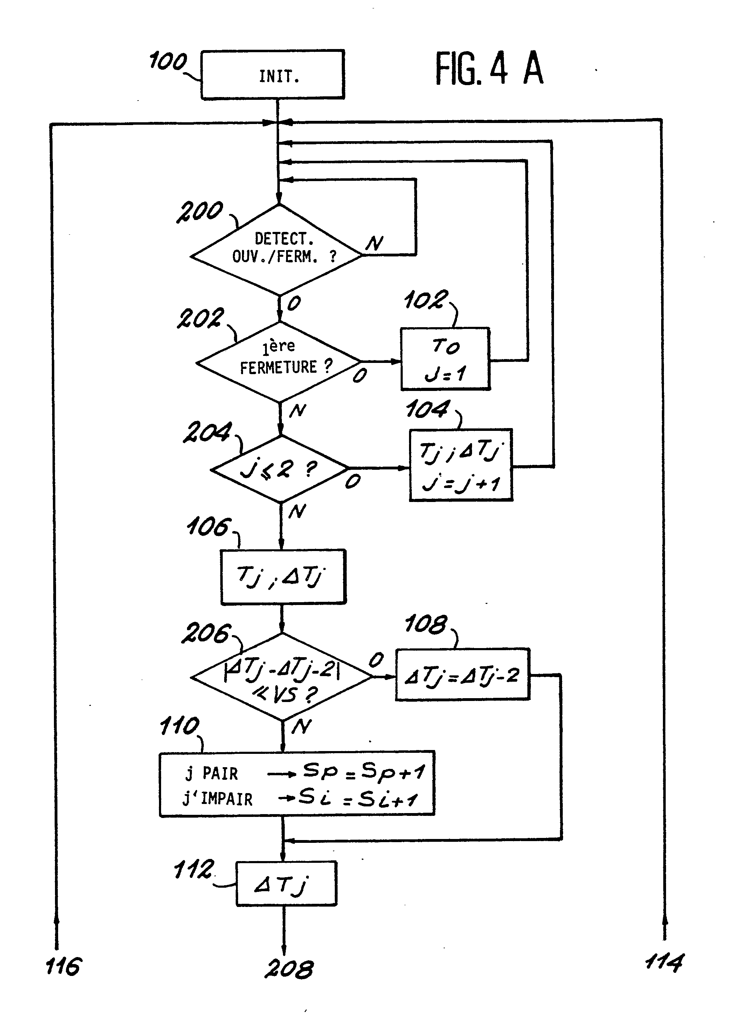

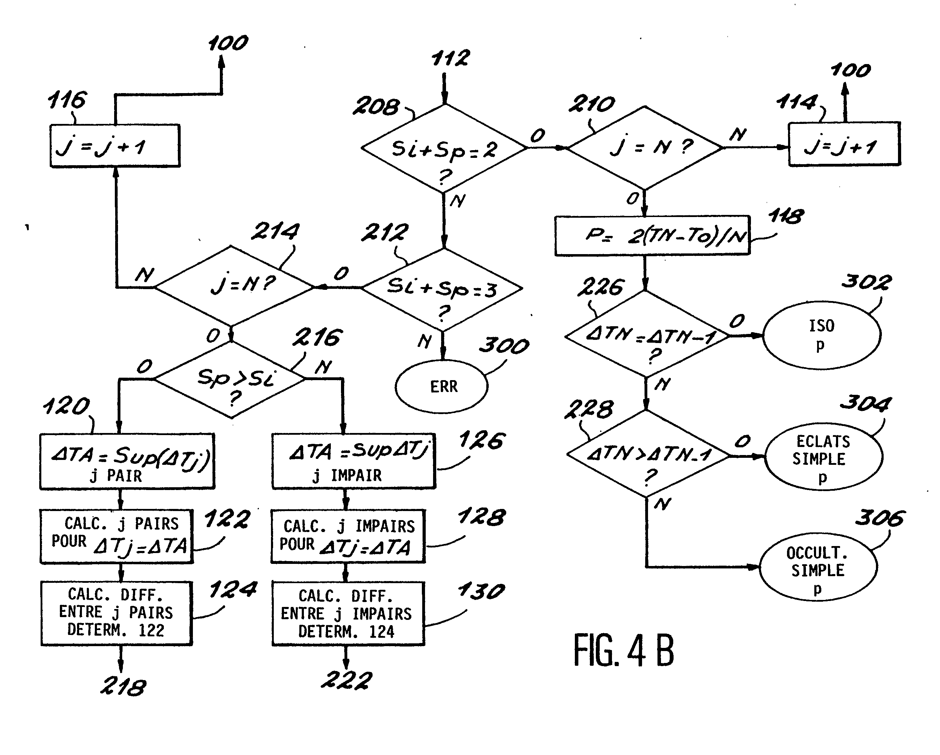

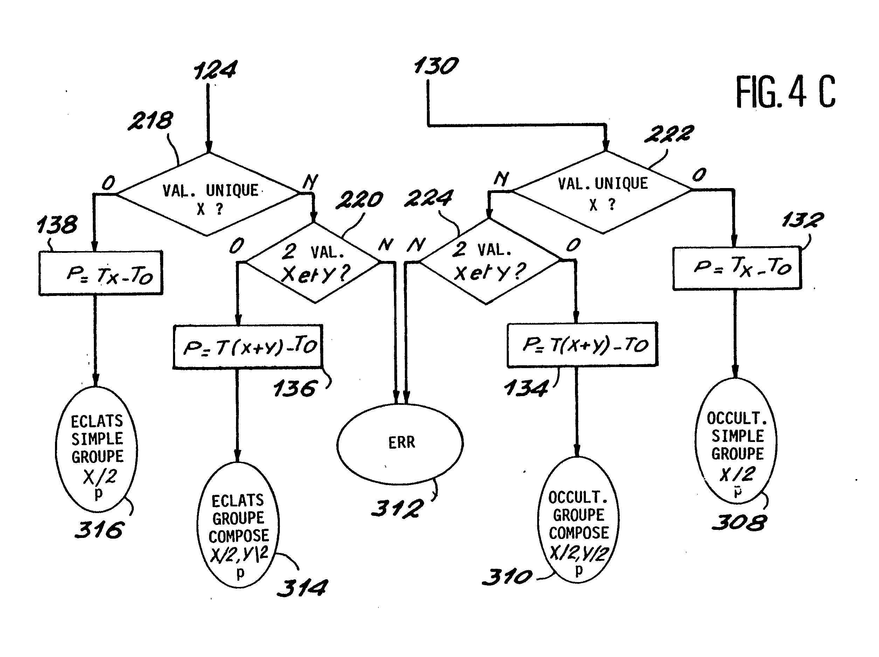

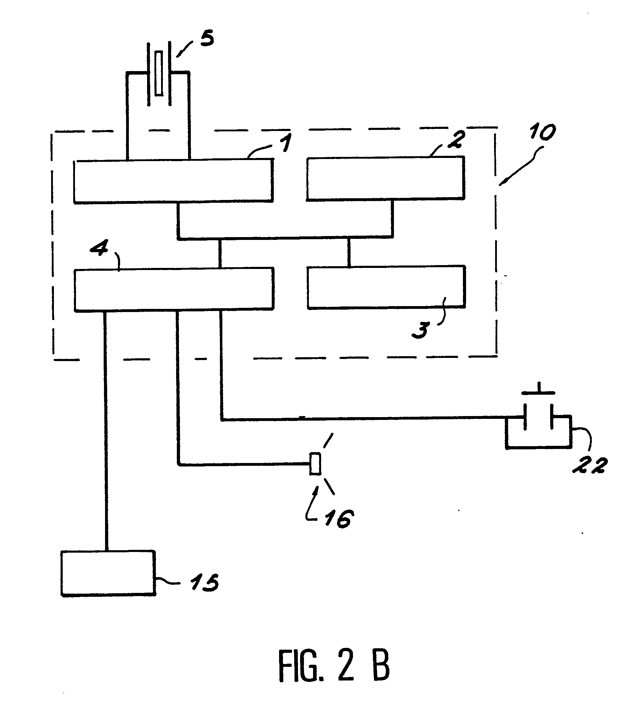

L'opérateur appuie sur le contacteur 22 à chaque fois qu'il observe le signal à identifier dans l'état allumé, et pendant toute la durée de cet état. Le microprocesseur 10 commandé par le contacteur 22 détermine le type, le rythme et la période en respectant l'organigramme représenté schématiquement sur les figures 4A, 4B, 4C et correspondant à un procédé pour la mise en oeuvre d'un dispositif conforme à l'invention.

On définit ci-après quelques paramètres utilisés dans la suite de la description.

$\Delta Tj = Tj - Tj\text{-}1$ : valeur de la durée d'un état j du signal à identifier entre les instants Tj-1 et Tj de début et de fin de cet état, j étant un entier allant de 1 à N, N étant un nombre déterminé d'états, suffisant pour une identification ; N est choisi pair, supérieur à 10 pour les cas où le rythme est simple, supérieur à 20 si le signal est groupé, par exemple.

To est l'instant de début de mesure correspondant à la première pression sur le contacteur.

TN est l'instant de fin de mesure. $\Delta Tj$ avec j impair correspond à la durée d'un état allumé ; $\Delta Tj$ avec j pair correspond à la durée d'un état éteint. Si et Sp sont respectivement les nombres de valeurs de durées différentes affectées aux états allumé et éteint.

Cet organigramme comprend des instructions correspondant à des opérations effectuées par le microprocesseur ; ces instructions sont représentées par des rectangles présentant une entrée (excepté pour l'initialisation) et une sortie :

100 : initialisation ; mise à zéro des registres ; mise à 1 des paramètres Si et Sp.

102 : enregistrement de l'instant To de début de la mesure. Mise à 1 de l'indice j.

104: mise en mémoire de l'instant Tj, calcul et mise en mémoire de $\Delta Tj = Tj - Tj\text{-}1$, incrémentation de l'indice j $(j = j + 1)$

106: mise en mémoire de Tj ; calcul de $\Delta Tj = Tj - Tj\text{-}1$

108: normalisation de $\Delta Tj$ à la valeur $\Delta Tj\text{-}2$

110: incrémentation de Si ou Sp selon la parité de j

112: mise en mémoire de $\Delta Tj$

114: incrémentation de j $(j = j + 1)$

116: incrémentation de j $(j = j + 1)$

118: calcul de la période $P = 2(TN-To)/N$

120: $\Delta TA$ = valeur supérieure des $\Delta Tj$ pour j pair

122: calcul de la suite des valeurs paires de j pour lesquelles $\Delta Tj = \Delta TA$

124: calcul de la suite des différences entre les valeurs successives de j déterminées en 122

126: $\Delta TA$ = valeur supérieure des $\Delta Tj$ pour j impair

4

128: calcul de la suite des valeurs impaires de j pour lesquelles $\Delta Tj = \Delta TA$

130: calcul de la suite des différences entre les valeurs successives de j déterminées en 128

132: calcul de la période $P = TX - To$

134: calcul de la période $P = T(X + Y) - To$

136: calcul de la période $P = T(X + Y) - To$

138: calcul de la période $P = TX - To$

L'organigramme comprend encore des tests logiques ou alternatives contenus dans des losanges présentant une entrée et deux sorties ; ces tests peuvent être formulés sous forme de questions auxquelles correspondent une alternative positive (notée "0" sur l'organigramme) ou négative (notée "N" sur l'organigramme).

200 : détection du changement d'état du contacteur (par ouverture ou fermeture) ?

202 : premier changement d'état du contacteur ?

204 : $j \leq 2$ ?

206 : valeur absolue de la différence $\Delta Tj - \Delta Tj$-2 inférieure ou égale à une valeur seuil (VS) ?

208 : $Si + Sp = 2$?

210 : $j = N$ ?

212 : $Si + Sp = 3$ ?

214 : $j = N$ ?

216 : $Sp > Si$ ?

218 : valeur unique X des différences calculées en 124 ?

220 : deux valeurs X et Y des différences calculées en 124 ?

222 : valeur unique X des différences calculées en 130 ?

224 : deux valeurs X et Y des différences calculées en 130 ?

226 : égalité de $\Delta TN$ et $\Delta TN - 1$?

228 : $\Delta TN > \Delta TN - 1$ ?

L'organigramme comprend enfin des ordres d'affichage des résultats que le microprocesseur envoie à l'écran. Ces instructions sont notées par des cercles :

300 : message d'erreur,

302 : signal isophase, période P,

304 : signal à éclats, simple, période P,

306 : signal à occultations, simple, période P,

308 : signal à occultations, simplement groupé par groupes de X/2, période P,

310 : signal à occultations, groupé et composé de deux groupes de X/2 et Y/2, période P,

312 : message d'erreur,

314 : signal à éclats, groupé et composé de deux groupes de X/2 et Y/2, période P,

316 : signal à éclats, simplement groupé par groupes de X/2, période P.

On peut résumer par les opérations suivantes cet organigramme :

pour chaque valeur de j,

- calculer $\Delta Tj$ et conserver cette valeur 104,

- pour j > 2, calculer la valeur absolue de la différence entre $\Delta Tj$ et $\Delta Tj$-2,

- si cette valeur est inférieure à une valeur seuil fixée, 1s par exemple, attribuer la valeur $\Delta Tj$-2 à la durée de l'état $\Delta Tj$ 108. Cette opération constitue une normalisation à une valeur unique des durées peu différentes entre elles, ces différences étant attribuées à la saisie manuelle du début et de fin d'un état du signal,

- déterminer Si et Sp, la somme Si + Sp devant être au maximum égal à 3. Cette dernière condition provient des normes en vigueur pour les balises côtières.

- Si $Si + Sp = 2$ et lorsque j = N alors le rythme est simple,

comparer $\Delta TN$ et $\Delta TN$-1 :

si $\Delta TN = \Delta TN$-1 alors le signal est isophase,

si $\Delta TN > \Delta TN$-1 alors le signal est à éclats,

si $\Delta TN < \Delta TN$-1 alors le signal est à occultations, calculer la période $P = 2(TN - To)/N$ 118.

- Si $Si + Sp = 3$ et lorsque j = N alors le signal est groupé, deux cas peuvent se produire, soit le signal comprend une durée d'émission et deux durées d'extinction (Sp = 2), soit le signal comprend une durée d'extinction et deux d'émission (Si = 2).

Si Sp = 2 le signal est à éclats, alors déterminer la suite des valeurs paires de j correspondant à l'extinction la plus longue 122, effectuer la différence entre ces valeurs successives 124.

Si X est la valeur unique de ces différences, alors le rythme est simple et les états allumés sont réunis par groupes de X/2 à l'intérieur d'une période. Calculer la période $P = TX - To$ 132.

Si X et Y sont les deux valeurs qu prennent ces différences alors le rythme est composé et les états allumés sont réunis par groupes de X/2 et Y/2 à l'intérieur d'une période, on calcule ensuite la période $P = T(X + Y)$-To 134.

Si Si = 2, le signal est à occultations, on cherche à déterminer le rythme et la périodicité de l'état éteint unique.

Pour cela, on détermine la suite des valeurs impaires de j correspondant à l'état allumé de plus longue durée, puis on effectue la différence entre ces valeurs successives 130.

Si X est la valeur unique de ces différences alors le signal est simplement groupé par groupes de X/2 états éteints à l'intérieur d'une période $P = TX$-To 136.

Si X et Y sont les deux valeurs que prennent ces différences, alors le signal est composé et les états éteints sont réunis par groupes de X/2 et Y/2 à l'intérieur d'une période $P = T(X + Y) - To$ 138.

A l'aide d'un dispositif selon l'invention, on peut parfaitement déterminer un signal périodique sans effort de réflexion ou de concentration. La saisie des données est rationnelle et toute subjectivité est retirée de l'interprétation du signal. Ce dernier peut être mémorisé à volonté en ajoutant, si l'opérateur le désire, la couleur dans le cas d'un signal lumineux. Il ne reste plus à l'opérateur qu'à se reporter à une table de référence des balises côtières pour se positionner. Par ailleurs, dans une variante de réalisation, cette table peut être mémorisée par le microprocesseur qui détermine ainsi lui-même la position recherchée.

Avec ou sans cette variante, le dispositif selon l'invention est d'un emploi facile ; il est léger et résistant aux diverses contraintes d'environnement. La possibilité d'utiliser une alimentation par piles le rend portable et maniable. Il peut être utilisé d'une main par un gaucher aussi bien que par un droitier.

Il va de soi que l'invention ne se limite pas seulement aux exemples de représentation plus spécialement décrits et représentés ; elle s'étend au contraire à toutes les variantes. En particulier, le contacteur pourrait être remplacé par un clavier alpha-numérique qui faciliterait le dialogue entre l'utilisateur et le microprocesseur.

Une autre variante consiste à intégrer au boîtier du dispositif et à coupler avec le microprocesseur un compas de relèvement électronique miniaturisé. Un tel compas est connu en soi, il relève l'angle entre la direction d'observation et la direction du Nord magnétique. Le résultat de cette mesure, analysé par le microprocesseur, permet de définir la position et de la conserver en mémoire. Cette variante constitue une aide importante pour le navigateur dans la détermination du point.

Enfin, on pourrait placer un photodétecteur relié à un boîtier de commande du contacteur, pour automatiser complètement le dispositif.

## Revendications

1. Procédé pour l'analyse et l'identification automatiques de signaux périodiques, ces signaux se composant de deux états alternés "allumés" et "éteints", caractérisé en ce qu'il consiste à :
déterminer la durée des différents états "allumés" et "éteints" successifs,
déterminer le nombre de valeurs prises par la durée des états "allumés" et "éteints",
en déduire, par des opérations appropriées, les informations suivantes : le type, le rythme et la période desdits signaux périodiques, afficher ces informations.

2. Procédé selon la revendication 1, caractérisé en ce que :
$\Delta Tj = Tj - Tj\text{-}1$ étant la valeur de la durée d'un état $j$ du signal à identifier entre les instants $Tj\text{-}1$ et $Tj$ de début et de fin de cet état, $j$ étant un entier allant de 1 à N, N étant un nombre déterminé d'états suffisants pour une identification, N étant choisi pair, To étant l'instant de début de mesure, TN étant l'instant de fin de mesure, $\Delta Tj$ avec $j$ impair correspondant à la durée d'un état allumé, $\Delta Tj$ avec $j$ pair correspondant à la durée d'un état éteint,
Si et Sp étant respectivement les nombres de valeurs de durées différentes affectées aux états allumés et éteints, la détermination du type de source émettant ledit signal à identifier, du rythme et de la période dudit signal consiste à :
A) pour chaque valeur de $j$,
calculer $\Delta Tj$ et conserver cette valeur $\Delta Tj$ (104), pour $j > 2$, calculer la valeur absolue de la différence entre $\Delta Tj$ et $\Delta Tj\text{-}2$ ; si cette valeur est inférieure à une valeur-seuil fixée, attribuer la valeur $\Delta Tj\text{-}2$ à la durée de l'état $\Delta Tj$ (normalisation) (108),
B) déterminer Si et Sp, la somme Si + Sp devant être au maximum égale à 3,
a) si Si + Sp = 2 lorsque $j$ = N alors le rythme est simple,
comparer $\Delta TN$ et $\Delta TN\text{-}1$,
si $\Delta TN = \Delta TN\text{-}1$ alors le signal est isophase,
si $\Delta TN > \Delta TN\text{-}1$ alors le signal est à éclats,
si $\Delta TN < \Delta TN\text{-}1$ alors le signal est à occultations,
calculer la période P = 2(TN-To)/N (118),
b) si Si + Sp = 3 et lorsque $j$ = N alors le signal est groupé,
i) si Sp = 2, le signal est à éclats,
déterminer la suite des valeurs paires de $j$ correspondant à l'extinction la plus longue (122),
effectuer la différence entre ces valeurs successives (124),
si X est la valeur unique de ces différences, alors le rythme est simple et les états allumés sont réunis par groupes de X/2 à l'intérieur d'une période,
calculer la période P = TX - To (132),
si X et Y sont les deux valeurs que prennent ces différences, alors le rythme est composé et les états allumés sont réunis par groupes de X/2 et Y/2 à l'intérieur d'une période,
calculer la période P = T(X + Y)-To (134),
ii) si Si = 2, le signal est à occultations,
déterminer la suite des valeurs impaires de $j$ correspondant à l'état allumé de plus longue durée (128),
effectuer la différence entre ces valeurs successives (130),
si X est la valeur unique de ces différences, alors le signal est simplement groupé en X/2 états éteints à l'intérieur d'une période,
calculer la période P = TX - To (136),
si X et Y sont les deux valeurs que prennent ces différences alors le signal est composé et groupé en groupes de X/2 et Y/2 états éteints à l'intérieur d'une période,
calculer la période P = T(X + Y)-To (138).

3. Dispositif pour la mise en oeuvre d'un procédé conforme à l'invention 1, caractérisé en ce qu'il comprend :

- un microprocesseur (10) muni d'une source d'alimentation électrique (18), apte à déterminer les informations suivantes : le type, le rythme et la période de signaux périodiques, ce microprocesseur (10) pouvant en outre mémoriser à volonté ces informations,

- un moyen (12) pour commander le microprocesseur (10) au moins en relation avec lesdits états "allumés" et "éteints", ce moyen (12) étant relié à au moins une entrée dudit microprocesseur (10), ce moyen (12) délivrant des signaux électriques aptes à la détermination de la durée des états "allumés" et "éteints" successifs par le microprocesseur (10),

- un moyen pour visualiser ces informations (14) relié par une entrée à une première sortie dudit microprocesseur (10).

4. Dispositif selon la revendication 3, caractérisé en ce qu'il comporte un boîtier de protection étanche (24).

FIG.1A

$P$

FIG.1B

$P$

FIG.1C

$P$

FIG.1D

G0    G0

$P$

FIG.1E

G1    G2

$P$

FIG. 2 A

18    20    10    12    22    15    14

16

FIG. 3

14    20    16

22    24

26

FIG. 4 A

EP 0 365 389 A1

**116**

$j = j + 1$

**100**

**112**

**208**  $S_i + S_p = 2$ ?

**210**  $j = N$ ?

**114**  $j = j + 1$

**100**

O

N

N

**214**  $j = N$ ?

**212**  $S_i + S_p = 3$ ?

**118**  $P = 2(T_N - T_o)/N$

O

O

**226**  $\Delta T_N = \Delta T_{N-1}$ ?

**302**  ISO p

O

N

**300**  ERR

**216**  $S_p > S_i$ ?

**228**  $\Delta T_N > \Delta T_{N-1}$ ?

**304**  ECLATS SIMPLE p

O

O

N

**120**  $\Delta T_A = Sup(\Delta T_j)$  j PAIR

**126**  $\Delta T_A = Sup \Delta T_j$  j IMPAIR

**306**  OCCULT. SIMPLE p

**122**  CALC. j PAIRS POUR $\Delta T_j = \Delta T_A$

**128**  CALC. j IMPAIRS POUR $\Delta T_j = \Delta T_A$

**124**  CALC. DIFF. ENTRE j PAIRS DETERM. 122

**130**  CALC. DIFF. ENTRE j IMPAIRS DETERM. 124

**218**

**222**

FIG. 4 B

FIG. 4 C

EP 0 365 389 A1

FIG. 2 B

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | EP-A-0 160 197 (Y. EFFRONT)<br>* Le document en entier *<br>--- | 1,3 | G 01 C 21/04<br>G 01 S 1/68 |
| X | US-A-4 255 749 (HENRY)<br>* Le document en entier *<br>--- | 1,3 | |
| A | GB-A-2 133 254 (G. LE PECHON)<br>* Le document en entier *<br>--- | 1-4 | |
| A | GB-A-2 024 567 (NEC)<br>* Le document en entier *<br>----- | 1-4 | |

**DOMAINES TECHNIQUES RECHERCHES (Int. Cl.5)**

G 01 C
G 09 B
G 01 S

Le présent rapport a été établi pour toutes les revendications

| Lieu de la recherche | Date d'achèvement de la recherche | Examinateur |
|---|---|---|
| LA HAYE | 16-01-1990 | BLONDEL F.J.M.L.J. |